# EUROPÄISCHE PATENTSCHRIFT

(11) **EP 1 662 240 B1**
(45) Veröffentlichungstag und Bekanntmachung des Hinweises auf die Patenterteilung: **23.02.2011**
(21) Anmeldenummer: 05014069.8
(22) Anmeldetag: 29.06.2005
(51) Int. Cl.: G01K 17/06, G05D 23/19

(54) **Heizkostenverteiler**
Heating cost distributor
Distributeur de frais de chauffage

(30) Priorität: 13.09.2004 DE 102004044106
(43) Veröffentlichungstag der Anmeldung: 31.05.2006
(73) Patentinhaber: Techem Energy Services GmbH, 65760 Eschborn (DE)
(72) Erfinder: Leblang, Lars, 60389 Frankfurt am Main (DE)
(74) Vertreter: KEIL & SCHAAFHAUSEN Patentanwälte

(56) Entgegenhaltungen:
- DE-A1- 3 243 198
- DE-U1- 8 219 913
- BAUMGARTH S: "STRATEGIEN ZUR ENERGIEOPTIMALEN HEIZUNGSREGELUNG" HLH ZEITSCHRIFT FUR HEIZUNG, LUFTUNG, KLIMATECHNIK, HAUSTECHNIK, VDI VERLAG. DUSSELDORF, DE, Bd. 42, Nr. 5, 1991, Seiten 315-318, XP000195110

## Beschreibung

Die Erfindung betrifft einen Heizkostenverteiler mit einem Sensor zur Messung der Heizkörpertemperatur eines durch Zufuhr von Heizfluid beheizbaren Heizkörpers in einem Raum, einem Sensor zur Messung der Raumtemperatur, einem Heizkörperregler, welcher die Raumtemperatur als Regelgröße verwendet und über seine Stellgröße die Zufuhr von Heizfluid zu dem Heizkörper regelt. Ferner weist der Heizkostenverteiler eine Auswerteeinrichtung auf, in der aus der Differenz der Heizkörpertemperatur und der Raumtemperatur der jeweils aktuelle Wärmeverbrauch ermittelt und registriert wird.

Heizkostenverteiler dienen der verbrauchsabhängigen Erfassung des Wärmeverbrauchs an Heizkörpern, die von Heizfluid durchflossen werden. Bei diesen Heizkörpern handelt es sich insbesondere um in einem Raum angeordnete Raumheizflächen im Sinne herkömmlicher Heizkörper zur Abgabe von Strahlungswärme.

Bei bereits bekannten elektronischen Heizkostenverteilern wird der individuelle Verbrauch des Heizkörpers mittels eines Einfühler- oder Zweifühlermessverfahrens erfasst. Die Zweifühler-Geräte weisen einen heizkörperseitigen und einen raumluftseitigen Temperatursensor auf, aus deren gemessener Temperaturdifferenz, multipliziert mit Korrekturwerten, auf die von dem Heizkörper abgegebene Wärme zurückgeschlossen wird. Einfühler-Geräte haben nur einen heizkörperseitigen Temperatursensor und rechnen mit einer festprogrammierten raumluftseitigen Temperatur. Üblicherweise sind solche elektronischen Heizkostenverteiler registrierende Messgeräte mit einer dimensionslosen Anzeige der Verbrauchseinheiten.

Im Allgemeinen läuft das Registrierverfahren für den Wärmeverbrauch wie folgt ab. Bevor der elektronische Heizkostenverteiler den Wärmeverbrauch berechnen kann, benötigt er von den Sensoren Temperaturwerte bestimmter Höhe, die einerseits physikalisch sinnvoll sind und andererseits den Bedingungen an Genauigkeit von Verbrauchserfassung, Sensorik, Rechenwerk usw. genügen. Diese Bedingungen zum Start der Registrierung und Berechnung des Wärmeverbrauchs können bspw. eine Mindest-Temperatur am Heizkörpertemperatur-Sensor und/oder eine minimal erforderliche Temperaturdifferenz zwischen dem Heizkörpertemperatur-Sensor und dem Raumtemperatur-Sensor sein, welche als thermische Startbedingungen bezeichnet werden.

Wird das Heizkörperventil zur Zufuhr von Heizfluid geöffnet, erwärmt sich der Heizkörper und der elektronische Heizkostenverteiler beginnt den Wärmeverbrauch zu registrieren, sobald der Heizköpertemperatur-Sensor einen Mindestwert erreicht hat, der eine thermische Bedingung für den Registrierbetrieb darstellt. Die Registrierung dauert dann so lange, bis - in der Regel durch Schließen des Heizkörperventils - dieser Mindestwert der Heizkörpertemperatur wieder unterschritten wird und somit die Registrierbedingung nicht mehr erfüllt ist. Der Wert für den Gesamtwärmeverbrauch und die Verbrauchsanzeige am elektronischen Heizkostenverteiler sind dann entsprechend der Dauer des Heizbetriebes und der abgegebenen Wärmemenge um eine entsprechende Anzahl Einheiten fortgeschritten.

Zu einer Erwärmung des Heizkörpers kann es jedoch auch außerhalb der allgemeinen Heizperiode bspw. im Sommer durch äußere Erwärmung der Raumluft oder durch Aufheizen des Heizkörpers in Folge direkter Sonneneinstrahlung kommen. Dann lässt sich anhand der vorbeschriebenen Registrierbedingungen jedoch nicht klar entscheiden, ob aktiv geheizt wird oder eine natürliche Erwärmung der Heizkörper-Oberfläche stattfindet. Da jedoch die thermische Startbedingung durch den elektronischen Heizkostenverteiler nach wie vor abgefragt wird, kann es bei Überschreiten der Mindesttemperatur zur Registrierung von vermeintlich abgegebener Wärme kommen und das Ergebnis des Gesamtwärmeverbrauchs verfälschen.

Ergebnis einer solchen "Sommerzählung" ist in der Regel eine höhere Verbrauchsanzeige, insbesondere in "klimatisch ungünstigen" Wohnräumen, wie bspw. Dachgeschoss oder Südseite mit ganztägiger Sonneneinstrahlung.

Diese Problematik wird durch das Zweifühler-Messverfahren weitgehend vermieden, bei dem zusätzlich zu der Heizkörpertemperatur auch die Raumtemperatur gemessen und die Temperaturdifferenz zwischen diesen Temperaturwerten als zusätzliche thermische Registrierbedingung verwendet wird. Ein solche Messung unterliegt allerdings prinzipbedingt der Gefahr einer äußeren thermischen Beeinflussung insbesondere des Raumtemperatur-Sensors. Sinkt die Temperaturdifferenz zwischen der gemessenen Heizkörpertemperatur und der gemessenen Raumlufttemperatur im Heizbetrieb unter den erforderlichen Mindestwert für die vorgenannte zweite thermische Registrierbedingung, so kann dies an einem Anstieg der durch den Raumtemperatur-Sensor gemessenen Temperatur bspw. aufgrund eines Wärmestaus an dem elektronischen Heizkostenverteiler oder einer gleichmäßigen Aufheizung von Heizkörper und Raumlift durch Sonneneinstrahlung liegen. Ein Wärmestau wird durch Unterdrückung der Luftströmung um den Raumtemperatur-Sensor erzeugt. Dies kann ungewollt bspw. beim Einbau von Heizkörperverkleidungen oder durch sperrige Möbelstücke erfolgen. Es ist jedoch auch eine bewusste thermische Manipulation des elektronischen Heizkostenverteilers möglich, um eine Zählung zu verhindern. Um eine solche Manipulation zu vermeiden, ist bei den herkömmlichen Heizkostenverteilern in der Regel eine Umschaltung auf eine Einfühler-Messung unter Verwendung einer fest vorgegebenen Raumtemperatur vorgesehen, sofern die Raumtemperatur und die Heizkörpertemperatur über einen langen Zustand einander im Wesentlichen gleich sind. Eine weitere Überprüfung der Daten des Raumtemperatur-Sensors auf Plausibilität erfolgt dann nicht mehr und der Verbrauch wird nach dem ungenaueren Einfühler-Messverfahren berechnet.

Ferner sind kombinierte elektronische Heizkostenverteiler und Heizkörperregler bekannt, die sowohl der Erfassung des Wärmeverbrauchs als auch der Regelung der Raumtemperatur einzelner Nutzeinheiten dienen. Der angezeigte Wärmeverbrauch wird dabei bspw. aus dem Durchfluss von Heizfluid durch das Heizkörperventil und aus der Temperaturdifferenz zwischen Vorlauf des Heizungssystems und Rücklauf des Heizkörpers der Nutzeinheit ermittelt. Die Vorlauftemperatur kann dabei durch ein Zusatzgerät, bspw. einen eintauchenden Fühler mit einer angeschlossenen Auswerteelektronik, zentral für alle Geräte der Abrechnungseinheit in der Vorlauf-Leitung erfasst und drahtgebunden an die einzelnen Geräte weitergeleitet werden. Der Rücklauftemperaturfühler ist in der Regel in die am Heizkörperventil angeordnete Regeleinrichtung integriert.

Aus der DE 297 10 248 U1 ist eine ähnliche Vorrichtung zur Wärmeverbrauchserfassung und Regelung der Heizleistung eines einzelnen Heizkörpers für eine Raumtemperaturregelung bekannt. Diese weist ein Ventil und eine Ventilbetätigungseinrichtung auf, wobei zur Heizkostenverteilung bzw. Wärmeverbrauchserfassung ein Vorlauftemperatursensor, ein Rücklauftemperatursensor und ggf. ein in der Vorlaufleitung angeordneter, die Druckdifferenz um das Ventil messender Druckdifferenzsensor sowie eine ein Rechenwerk enthaltende Zentraleinheit vorgesehen sind. Zur Regelung der Heizleistung sind zusätzlich ein Raumlufttemperatursensor angeordnet und eine Zentraleinheit mit sämtlichen Sensoren und der Ventilbetätigungseinrichtung verbunden.

Aus der DE 200 09 158 U1 ist ein ähnlicher in einem Heizkörper-Regler integrierter Heizkostenverteiler mit Sensoren zur Erfassung der Vorlauf-, der Rücklauf- und der Raumtemperatur bekannt, wobei der Rücklauftemperatur-Sensor und der Raumtemperatur-Sensor als in einem gemeinsamen Gehäuse angeordneter Zweifachsensor ausgebildet sind und der Zweifachsensor die Rücklauftemperatur des Heizmediums und die Temperatur der von dem Heizmedium angesaugten Raumluft misst. Optional ist der Einsatz eines zusätzlichen Strömungssensors.

Ferner ist in der DE 32 43 198 A1 ein Verfahren zur Ermittlung des Wärmeverbrauchs von Heizkörpern in Zusammenwirkung mit einer Heizkörperregelung beschrieben, wobei die Stellung des Drosselzustand des Ventils als Maß für die Durchflussmenge benutzt wird. Dabei wird eine Differenz aus Vorlauf- und Rücklauftemperatur mit dem Drosselzustand multipliziert, wobei dieser Wert über die Betriebszeit integriert, gespeichert und angezeigt wird. Bei diesen Kombinationsgeräten aus Heizkostenverteiler und Heizkörperregler werden in der Regel sehr viele Messgrößen und Sensoren, wie Vorlauf-/Rücklauftemperatur, Durchfluss etc. benötigt, um den Wärmeverbrauch bestimmen zu können. Häufig sind dazu auch ein Eingriff in die Rohrleitung im Strang oder am Heizkörper sowie ein komplexer Heizkörperregler mit integriertem Strömungssensor und viel Messtechnik für eine erhöhte Registriergenauigkeit erforderlich.

Aufgabe der Erfindung ist es daher, einen einfach aufgebauten Heizkostenverteiler vorzuschlagen, der ohne großen zusätzlichen messtechnischen Aufwand die Registriergenauigkeit für den Wärmeverbrauch verbessert.

Diese Aufgabe wird bei einem Heizkostenverteiler der eingangs genannten Art mit den Merkmalen des Anspruchs 1 im Wesentlichen dadurch gelöst, dass in der Auswerteeinrichtung aus der Stellgröße des Heizkörperreglers eine Zustandsgröße für die Zufuhr von Heizfluid zu dem Heizkörper abgeleitet und der aktuelle Wärmeverbrauch nur ermittelt und/oder registriert wird, wenn die Zustandsgröße eine Zufuhr von Heizfluid zu dem Heizkörper anzeigt. Dadurch wird eine eindeutige Start- und Stoppbedingung zur Registrierung des Wärmeverbrauchs erreicht. Wenn die Zustandsgröße anzeigt, dass das Heizkörperventil für die Zufuhr von Heizfluid geschlossen ist, findet keine Zählung statt. Aufgrund dieser nicht thermischen sondern massenstromabhängigen Registrierbedingung kann also eine ungewollte Sommerzählung mit Sicherheit ausgeschlossen werden. Insgesamt wird durch die erfindungsgemäße Kombination des Heizkostenverteilers und des Heizkörperreglers also eine erhebliche Verringerung des messtechnischen Aufwands solcher Kombigeräte erreicht.

Der Heizkörperregler verfügt in der Regel ohnehin über eine Raumtemperaturmessung und ein Rechenwerk zur Bestimmung der Stellgröße der Regelung. In diesem Rechenwerk kann die erfindungsgemäße Zustandsgröße einfach abgeleitet werden. Für den Heizkostenverteiler ist daher zusätzlich nur noch ein Heizkörper-Temperatursensor notwendig, um den Wärmeverbrauch mit hoher Genauigkeit erfassen und registrieren zu können. Dabei werden die vorhandenen und gemessenen Parameter optimal sowohl für die Regelung als auch die Wärmeverbrauchserfassung ausgenutzt. Im Vergleich zu den Kombinationsgeräten aus Stand der Technik sind dafür keine Vorlauf- und Rücklauf-Temperatursensoren mit ggf. einem Eingriff in das Rohrleitungssystem notwendig. Ferner muss kein Strömungssensor zum Erkennen der Durchflussmenge im Heizbetrieb vorgesehen werden. Dadurch ergibt sich ein vereinfachter und kostengünstiger Aufbau des erfindungsgemäßen Heizkostenverteilers, bei dem zusätzlich Möglichkeiten zur Beeinflussung des Raumtemperatur-Sensors sehr stark eingeschränkt sind, weil vor der Verbrauchsberechnung durch Abfragen einer Zustandsgröße eine Plausibilitätsprüfung durchgeführt wird.

In einer besonders bevorzugten Ausgestaltung des Systems weist die Zustandsgröße nur zwei Informationszustände auf, von denen der eine keine Zufuhr von Heizfluid und der andere eine Zufuhr von Heizfluid anzeigt. Aus der Stellgröße, die erfindungsgemäß sowohl als direkte Größe, bspw. Ventilstößelstellung, Umdrehungen von Getriebezahnrädern, o.ä., als auch als indirekte Größe, bspw. relative Stellung des Stößels bezüglich einer Basisstellung, binärer Zähler innerhalb der Regler-Software, o.ä., ausgebildet sein kann, muss lediglich ein digitaler Zustand des Heizkörperventils für die Zufuhr von Heizfluid abgeleitet werden, nämlich ob dieses geschlossen oder geöffnet ist. Mit dieser digitalen Entscheidung kann also auf einfache Art der Status "Heizbetrieb" erfasst werden. Insbesondere ist keine Übermittlung der absoluten Stellung des Ventils (Ventilhub in mm oder Öffnungsgrad in %) nötig, so dass softwareseitig in dem Rechenwerk nur ein Bit dafür benötigt wird. Dies reduziert den in einem Rechenwerk erforderlichen Speicherplatz und führt bspw. bei der Funkübertragung dieses Parameters "Zustandgröße" zu funktechnisch optimalen kleineren Funktelegrammen.

Als zusätzliche thermische Registrierbedingung kann die Auswerteeinrichtung derart eingerichtet sein, dass der aktuelle Wärmeverbrauch nur ermittelt und/oder registriert wird, wenn die Differenz der Heizkörpertemperatur und der Raumtemperatur einen vorgegebenen Schwellenwert überschreitet. Durch diese zusätzliche thermische Bedingung kann erreicht werden, dass es aufgrund der tatsächlichen Temperaturdifferenz zwischen dem Heizkörper und dem umgebenden Raum tatsächlich zu einer Wärmeabgabe kommt. Diese Registrierbedingung kann erfindungsgemäß an weitere Bedingungen, bspw. in Bezug auf Heizkörpertemperatur und/oder Raumtemperatur, gekoppelt werden.

Zur Erhöhung des Ablesekomforts kann die Auswerteeinrichtung an eine Zentraleinheit zur Speicherung und/oder Anzeige des Gesamtwärmeverbrauchs einer oder mehrerer Heizkostenverteiler angeschlossen sein. Dies kann sowohl drahtgebunden bspw. mittels eines Datenbusses oder durch Funkübertragung erfolgen. Dadurch wird erfindungsgemäß ermöglicht, dass der Wärmeverbrauch aller bspw. in einer Wohnung vorhandenen Heizkostenverteiler zentral an der Zentraleinheit abgefragt und abgelesen werden kann.

Vorzugsweise sind der Sensor zur Messung der Heizkörpertemperatur und der Heizkörperregelung in verschiedenen Geräteeinheiten angeordnet. Dadurch ergeben sich u.a. bessere "C-Werte" des elektronischen Heizkostenverteilers, da die thermische Anbindung des im Regler integrierten Raumtemperatur-Sensors an die Raumluft in der Regel besser ist als in einem elektronischen Heizkostenverteiler nach dem Stand der Technik, in dem der Sensor zur Messung der Heizkörpertemperatur und der Sensor zur Messung der Raumtemperatur in demselben Gehäuse angeordnet sind.

Erfindungsgemäß kann die Auswerteeinrichtung in dem Heizkörperregler, in die Geräteeinheit mit dem Sensor zur Messung der Heizkörpertemperatur und/oder in die zentrale Einheit integriert sein. Es ist auch denkbar, die Auswerteeinrichtung auf verschiedene Rechenwerke in den einzelnen Geräten zu verteilen. So ist es bspw. sinnvoll, die Ermittlung der Zustandsgröße aus der Stellgröße in dem Rechenwerk des Heizkörperreglers durchzuführen und diesen Wert sowie die Werte für die Raumtemperatur und die Heizkörpertemperatur bspw. an eine zentrale Einheit zu übertragen, in der eine zentrale Auswerteeinrichtung die Ermittlung und Berechnung des Wärmeverbrauchs zentral für mehrere Heizkostenverteiler vornimmt. Dies vermindert den gerätetechnischen Aufwand in einem einzelnen Heizkostenverteiler erheblich.

Ferner kann erfindungsgemäß der Sensor zur Erfassung der Raumtemperatur in dem Heizkörperregler, die Geräteeinheit mit dem Sensor zur Messung der Heizkörpertemperatur und/oder eine separate Geräteeinheit integriert sein, welche bspw. an einer für die Messung der Raumtemperatur optimalen Stelle angeordnet ist. Für den erfindungsgemäßen Heizkostenverteiler ist das Vorsehen eines Sensors zur Erfassung der Raumtemperatur in einem Raum ausreichend. Dadurch kann ein zusätzlicher Temperatursensor im elektronischen Heizkostenverteiler eingespart werden, da die Werte des Raumtemperatur-Sensors bspw. aus dem Heizkörperregler doppelt genutzt werden, wodurch sich die Bauteilekosten und der Kalibrieraufwand vermindern. Es ist jedoch auch möglich, erfindungsgemäß mehr als zwei Raumtemperatur-Sensoren vorzusehen und die von diesen Sensoren gemessenen Temperaturwerte zu vergleichen. Ein direkter Vergleich des Temperaturwerts des Raumtemperatur-Sensors in dem Heizkörperregler mit dem Raumtemperaturwert eines Temperatursensors bspw. in der Geräteeinheit mit dem Sensor zur Messung der Heizkörpertemperatur können in Verbindung mit der Stell- bzw. Zustandsgröße zu einer eindeutigen Manipulations- oder Wärmestauerkennung führen.

Wenn die verschiedenen Komponenten des Heizkostenverteilers in mehreren Geräteeinheiten angeordnet sind, ist erfindungsgemäß vorgesehen, dass der Heizkörperregler, die separaten Geräteeinheiten und/oder die Zentraleinheit je eine Datenübertragungseinrichtung zum Senden und/oder Empfangen von Daten aufweisen. Dabei können die Datenübertragungseinrichtungen bspw. an ein Kabelsystem, wie bspw. ein Datenbussystem, angeschlossen sein. Besonders einfach lässt sich die Installation jedoch gestalten, wenn die relevanten Daten in Form von Funktelegrammen drahtlos übertragen werden. Aufgrund der erfindungsgemäß geringen Anzahl von Sensoren sind auch nur wenige Messwerte zu übertragen. Dies führt zu einem einfachen Inhalt der Funktelegramme zwischen Heizkörperregler, separaten Geräteeinheiten und/oder Zentraleinheit. Ferner sind nur 1 Bit einer das Vorhandensein eines Massenstroms anzeigenden Zustandsgröße und höchstens je eine Zahl für den Raumtemperaturwert und Heizkörpertemperaturwert nötig. Dies führt zu kleineren Funktelegrammen, die funktechnisch einfach zu handhaben sind.

Gemäß einer weiteren Ausführungsform der vorliegenden Erfindung kann der Heizkörperregler als elektronischer Heizkörperregler mit Stelleingriff auf ein Heizkörperventil oder als manuelles Thermostatventil mit integrierter Stellgrö-ßendetektion und Datenübertragungseinrichtung ausgebildet sein. Damit ist der elektronische Heizkostenverteiler variabel an bestehende Heizsysteme anschließbar.

Weiterbildungen, Vorteile und Anwendungsmöglichkeiten der Erfindung ergeben sich auch aus der nachfolgenden Beschreibung von Ausführungsbeispielen und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: schematisch einen erfindungsgemäßen Heizkostenverteiler gemäß einer ersten Ausführungsform;
- Fig. 2: schematisch einen erfindungsgemäßen Heizkostenverteiler gemäß einer zweiten Ausführungsform und
- Fig. 3: schematisch einen erfindungsgemäßen Heizkostenverteiler gemäß einer dritten Ausführungsform.

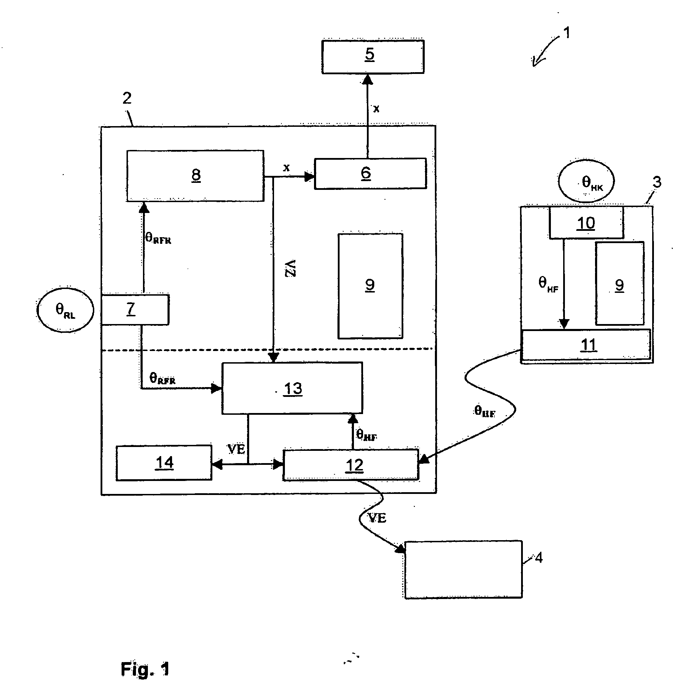

Fig. 1 stellt einen Heizkostenverteiler 1 gemäß einer ersten Ausführungsform der vorliegenden Erfindung dar, der aus einem Heizkörperregler 2, einem als separate Geräteeinheit ausgebildeten Heizkörperfühler 3 und einer Zentraleinheit 4 aufgebaut ist.

Der Heizkörperregler 2 greift mit seiner Stellgröße x auf ein Heizkörperventil 5 zur Regelung der Zufuhr von Heizfluid zu einem nicht dargestellten Heizkörper zu. Dazu ist eine Mechanik 6 vorgesehen, die in Abhängigkeit von der vorgegebenen Stellgröße x der Regelung auf den Ventilstößel in dem Heizkörperventil 5 einwirkt und den Heizfluid-Durchfluss entsprechend dem gewünschten Regelergebnis einstellt.

Als Regelgröße dient die als Raumlufttemperatur erfasste Raumtemperatur Θ_{RL}, die mit einem Raumtemperatur-Sensor 7 zur Messung der Raumtemperatur Θ_{RL} bestimmt und als gemessene Raumtemperatur Θ_{RFR} in Form eines Messwertes einem Rechenwerk 8 des Heizkörperreglers 2 zugeleitet wird. In dem Rechenwerk 8 wird mit Hilfe der hinterlegten Regelalgorithmen aus der Regelgröße Raumtemperatur Θ_{RL} bzw. Θ_{RFR} die Stellgröße x zum Einstellen der Ventilstellung des Heizkörperventils 5 abgeleitet.

Die Energieversorgung in dem Heizkörperregler 2 erfolgt durch eine Batterie 9.

Zur Ermittlung des aktuellen Wärmeverbrauchs weist der Heizkostenverteiler 1 zusätzlich einen als separate Geräteeinheit ausgebildeten Heizkörperfühler 3 mit einem Heizkörpertemperatur-Sensor 10 auf, der möglichst unmittelbar an der nicht dargestellten Heizfläche eines Heizkörpers anliegt und die Heizkörpertemperatur Θ_{HK} misst. Der Messwert wird als gemessene Heizkörpertemperatur Θ_{HF} an eine Sende-/Empfangseinheit 11 des Heizkörperfühlers 3 übertragen. Diese ist als reine Sendeeinheit für die Funkübertragung eingerichtet, da eine bidirektionale Funkkommunikation bei dieser Ausführungsform der Erfindung nicht erforderlich ist. Die notwendige Energieversorgung bezieht der Heizkörperfühler 3 ebenso aus einer Batterie 9.

Die Sende-/Empfangseinheit 11 überträgt die gemessene Heizkörpertemperatur Θ_{HF} an eine in dem Heizkörperregler 2 angeordnete Sende- und Empfangseinheit 12. Diese leitet den gemessenen Heizkörpertemperaturwert Θ_{HF} einem als Teil einer Auswerteeinrichtung des Heizkostenverteilers 1 dienenden Rechenwerk 13 zu. Mit diesem Messwert wäre bereits eine Registrierung des Wärmeverbrauchs nach dem Einfühler-Messverfahren möglich. Zusätzlich zu der gemessenen Heizkörpertemperatur Θ_{HF} wird von dem in dem Gehäuse des Heizkörperreglers 2 aufgenommenen Raumtemperatur-Sensor 7 die gemessene Raumtemperatur Θ_{RFR} an das Rechenwerk 13 übertragen. Ferner wird dem Rechenwerk 13 von dem insoweit auch als Auswerteeinrichtung dienenden Rechenwerk 8 eine aus der Stellgröße x abgeleitete Zustandsgröße VZ für die Zufuhr von Heizfluid zu dem Heizkörper zugeführt, die angibt, ob der Ventilzustand auf oder zu ist, d.h. ob dem Heizkörper Heizfluid zugeführt wird oder nicht.

Der ermittelte Wärmeverbrauch VE wird auf einem Display 14 des Heizkörperreglers 2 angezeigt und über die Sende- und Empfangseinheit 12 zur zentralen Erfassung auch der Zentraleinheit 4 zugeleitet.

Nachfolgend wird das angewendete Zweifühler-Messverfahren des Heizkostenverteilers 1 in Kombination mit dem elektronischen Heizkörperregler 2, der seine Stellgröße x kennt bzw. detektieren kann und die Regelgröße Raumlufttemperatur Θ_{RL} mittels eines in sein Gehäuse integrierten Raumtemperatur-Sensors 7 misst, näher beschrieben. Dabei ist auch das Rechenwerk 13 des Heizkostenverteilers 1 in das Gehäuse des Heizkörperreglers 2 integriert.

Die gemessene Raumtemperatur Θ_{RFR} und die Stellgröße x liegen während des Regelprozesses als notwendige Parameter in dem Heizkörperregler 2 vor und werden von dem Heizkostenverteiler 1 als Messwert bzw. zur Ableitung der als Registrierbedingung dienenden Zustandsgröße VZ mit verwendet. Die Raumtemperatur Θ_{RFR} wird dabei in der üblichen Weise einer Zweifühler-Messung für die Berechnung des Wärmeverbrauchs VE herangezogen. Die zur Berechnung des Wärmeverbrauchs ebenfalls erforderliche heizkörperseitige Temperatur Θ_{HK} wird durch den Heizkörperfühler 3 mittels des Sensors 10 erfasst, der bspw. wie bei Heizkostenverteilern üblich auf der Heizfläche des Heizkörpers montiert ist (50% Baulänge, 75% Bauhöhe). Damit ist die Abrechnung nach der Heizkostenverordnung gewährleistet und die bereits vorhandenen Befestigungsvorrichtungen (Wärmeleiter) für den Heizkörperfühler müssen nicht ersetzt oder ausgetauscht werden. Die an dem Heizkörper gemessene Heizkörpertemperatur Θ_{HF} wird per Funk ebenfalls dem Rechenwerk 13 des Heizkostenverteilers übertragen, so dass dieses aus den gemessenen Temperaturen Θ_{RFR} und Θ_{HF} zusammen mit der Zustandsgröße VZ als Registrierbedingung den aktuellen Wärmeverbrauch VE sehr genau erfassen kann.

Bei Normalbetrieb öffnet der Heizkörperregler 2 das Heizkörperventil 5, so dass Heizfluid in den Heizkörper einströmt. Dann liegt in der Regel Heizbetrieb vor. Der Heizkörperregler übermittelt die Information dieses aus seiner Stellgröße x abgeleiteten Zustands als Zustandsgröße VZ an den elektronischen Heizkostenverteiler, so dass dessen Messkreis in den Zustand "Registrierung erlaubt" versetzt wird. Dies bedeutet aber nicht, dass der Heizkostenverteiler 1 bzw. dessen Rechenwerk 13 sofort mit der Registrierung beginnt. Zusätzlich müssen noch die herkömmlichen thermischen Registrierbedingungen im Hinblick auf die gemessene Raumtemperatur Θ_{RFR} und die gemessene Heizkörpertemperatur Θ_{HF} erfüllt sein, wie dies auch im Stand der Technik üblich ist. Sind alle Registrierbedingungen zu einem Zeitpunkt t erreicht, beginnt die Registrierung und findet so lange statt, wie der Zustand "Ventil offen" anhält und alle Registrierbedingungen erfüllt sind.

Schließt nun der Heizkörperregler 2 das Heizkörperventil 5, wird der Zustand "Ventil geschlossen" als Zustandsgröße VZ übermittelt und der elektronische Heizkostenverteiler 1 stoppt die Zählung des aktuellen Wärmeverbrauchs zu dem Gesamtwärmeverbrauch VE unmittelbar oder mit einem definierten Zeitverzug. Letzterer ist sinnvoll, wenn der Hauptteil der im erwärmten Heizkörper gespeicherten Energie auch nach Abschalten der Heizfluidzufuhr bzw. des Heizfluidmassenstroms erfasst werden soll.

Bei dem vorbeschriebenen Messverfahren gemäß der Erfindung kann eine unerwünschte Sommerzählung nicht mehr stattfinden, da der Heizkörperregler 2, sobald das Heizkörperventil 5 geschlossen ist, den Status "Ventil zu" in Form der Zustandsgröße VZ an die Auswerteeinrichtung 13 des Heizkostenverteilers 1 übermittelt, so dass dieser keine Freigabe zur Registrierung des Wärmeverbrauchs hat. Eventuelle Spülvorgänge der Heizungsanlage inklusive Heizkörper während des Sommers bewirken zwar kurzzeitig den Ventilzustand auf, werden jedoch nicht als Wärmeverbrauch VE registriert, da in einem solchen Fall die zusätzlich vorhandenen thermischen Registrierbedingungen in der Regel nicht erfüllt sind.

Zudem werden Ungenauigkeiten durch einen unbeabsichtigten Wärmestau oder gezielte Manipulationen durch Abdecken des Raumluftsensors erschwert, da sich die exakte Gleichheit von Heizkörpertemperatur-Sensor 10 und Raumtemperatur-Sensor 7 durch ihre räumliche Trennung nur schwer realisieren lässt.

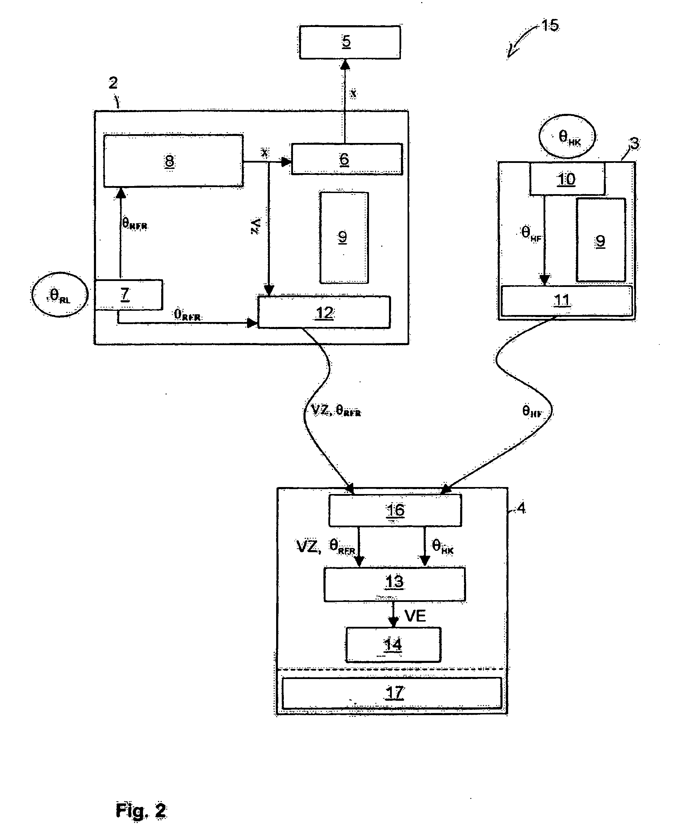

In Fig. 2 wird eine zweite Ausführungsform eines Heizkostenverteilers 15 beschrieben, der nach dem gleichen Messprinzip arbeitet wie der vorbeschriebene Heizkostenverteiler 1. Daher wird auf eine detaillierte Beschreibung des Heizkostenverteilers 15 verzichtet. Der Einfachheit halber sind identische Funktionsteile auch mit denselben Bezugszeichen versehen wie bei dem Heizkostenverteiler 1.

Bei dieser zweiten Ausführungsform sind der Heizkörperregler 2 und der Heizkostenverteiler 1 stärker in ein sogenanntes "Zentralsystem" eingebunden. Neu an dieser Ausführung ist, dass sowohl der Heizkörperregler 2 als auch der Heizkörperfühler 3 ihre Daten unverarbeitet an die Zentraleinheit 4 senden, die diese Daten mit einer Sende- und Empfangseinheit 16 empfängt. Erst dort wird aus der gemessenen Raumtemperatur Θ_{RFR}, der gemessenen Heizkörpertemperatur Θ_{HF} und der Zustandsgröße VZ in dem in der Zentraleinheit 4 angeordneten Rechenwerk 13 des Heizkostenverteilers 15 der Wärmeverbrauch VE berechnet, auf einem Display 14 und ggf. weiter verarbeitet. Neben dem Rechenwerk 13 des Heizkostenverteilers 15 können in der Zentraleinheit 4 weitere Funktionseinheiten 17 vorgesehen sein. Damit wird der Heizkostenverteiler 15 durch Zusammenwirken des gesamten Systems bestehend aus den Komponenten Zentraleinheit 4, Heizkörperfühler 3 und Heizkörperregler 2 gebildet. Diese Ausführungsform weist den Vorteil auf, dass kein zusätzliches Rechenwerk 13 (Mikrochip usw. oder Display) in jedem Heizkörperregler 2 oder Heizkörperfühler 3 notwendig ist, sondern nur ein zentrales Rechenwerk für eine Vielzahl von Heizkostenverteilern 1.

Anstelle des in den Heizkörperregler 2 integrierten Raumtemperatur-Sensors 7 kann auch ein separater, an geeigneter Stelle im Raum anzubringender Raumlufttemperatur-Sensor eingesetzt werden. Damit würde auch die Bestimmung des C-Wertes des Heizkörperreglers entfallen. Dieses System funktioniert vorzugsweise funkbetrieben, kann aber auch kabelgebunden ausgeführt sein.

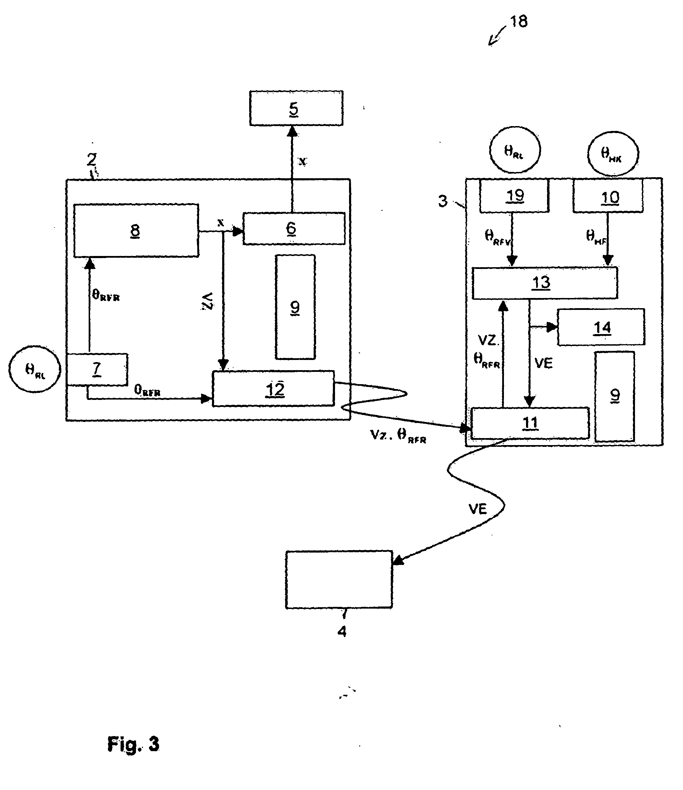

In Fig. 3 ist eine dritte Ausführungsform der Erfindung mit einem Heizkostenverteiler 18 dargestellt, der in der Funktionsweise den Heizkostenverteilern 1 und 15 ähnelt. Auch hier werden für gleiche Elemente dieselben Bezugszeichen verwendet. Auf eine detaillierte Beschreibung wird verzichtet.

Der Heizkostenverteiler 18 unterscheidet sich von den vorbeschriebenen Heizkostenverteilern 1 und 15 im Wesentlichen durch den Aufbau des Heizkörperfühlers 3. Dieser weist neben dem Heizkörpertemperatur-Sensor 10 zur Messung der Heizkörpertemperatur Θ_{HK} auch einen Raumtemperatur-Sensor 19 auf, mit dem die Raumtemperatur Θ_{RL} gemessen wird. Diese Werte werden als gemessene Heizkörpertemperatur Θ_{HF} und gemessene Raumtemperatur Θ_{RFV} zu dem ebenfalls in dem Heizkörperfühler 3 angeordneten Rechenwerk 13 des Heizkostenverteilers übermittelt. Die Zustandsgröße VZ wird in vorbeschriebener Weise von dem Heizkörperregler 2 an das Rechenwerk 13 des Heizkörperfühlers übertragen.

Ferner wird der mit dem Raumtemperatur-Sensor 7 des Heizkörperreglers 2 gemessene Raumtemperaturwert Θ_{RFR} an den Heizkörperfühler 3 übertragen und dem Rechenwerk 13 zusätzlich zugeführt. Die gemessene Raumtemperatur Θ_{RFR} dient in diesem Fall nicht direkt als Messgröße sondern als Referenzwert. Bei diesem Ausführungsbeispiel ist der Heizkostenverteiler 18 im Wesentlichen in den Heizkörperfühler 3 mit integriert, wie dies bspw. beim Stand der Technik üblich ist. Zusätzlich besteht über die Sende- und Empfangseinheiten 11, 12 eine Datenverbindung zu dem Heizkörperregler 2, um die Parameterzustandsgröße VZ und Raumtemperatur Θ_{RFR} zu empfangen.

Ein Vorteil dieser Ausführung liegt in der eindeutigen Erkennung eines Wärmestaus. Beim Heizbetrieb muss die am Heizkörperregler 2 gemessene Raumtemperatur Θ_{RFR} kleiner sein als die am Heizkörperfühler 3 gemessene Raumtemperatur Θ_{RFV}, da dort der Einfluss der Strahlungswärme auf die erfasste Raumtemperatur Θ_{RFV} wesentlich höher ist. Wenn beide Temperaturwerte im Wesentlichen gleich sind, kann kein Heizbetrieb vorliegen und das Ventil muss zu sein. Dies kann anhand der Zustandsgröße VZ überprüft werden. Ist die Ventilstellung jedoch auf, liegt entweder ein Wärmestau oder eine Manipulation vor.

Der in der Recheneinheit 13 ermittelte Wärmeverbrauch VE kann auch bei dieser Ausführungsform zu einer Zentraleinheit 4 übertragen werden, in der der Wärmeverbrauch VE für eine Vielzahl von Heizkostenverteiler 1, 15, 18 abrufbar ist.

Durch die Einbeziehung und Ausnutzung der Parameter der Heizkörperregelung 2 in die Bestimmung des Wärmeverbrauchs VE wird ein einfacher und ohne aufwendige zusätzliche Sensorik realisierbarer Heizkostenverteiler geschaffen, der neben der thermischen Registrierbedingung auch eine vom Massenstrom des Heizfluids abhängige Registrierbedingung aufweist. Dadurch wird eine große Genauigkeit bei der Ermittlung des Wärmeverbrauchs erreicht.

### Bezugszeichenliste:

- 1: Heizkostenverteiler
- 2: Heizkörperregler
- 3: Heizkörperfühler
- 4: Zentraleinheit
- 5: Heizkörperventil
- 6: Mechanik
- 7: Raumtemperatur-Sensor
- 8: Rechenwerk
- 9: Batterie
- 10: Heizkörpertemperatur-Sensor
- 11: Sende- und Empfangseinheit
- 12: Sende- und Empfangseinheit
- 13: Rechenwerk
- 14: Display
- 15: Heizkostenverteiler
- 16: Sende- und Empfangseinheit
- 17: Funktionseinheit
- 18: Heizkostenverteiler
- 19: Raumtemperatur-Sensor

- Θ_{RL}: Raumtemperatur
- Θ_{RFR}: gemessene Raumtemperatur (Heizkörperregler)
- Θ_{RFV}: gemessene Raumtemperatur (Heizkörperfühler)
- Θ_{HK}: Heizkörpertemperatur
- Θ_{HF}: gemessene Heizkörpertemperatur (Heizkörperfühler)
- VE: Wärmeverbrauch, Gesamtwärmeverbrauch
- VZ: Zustandsgröße
- x: Stellgröße

## Patentansprüche

1. Heizkostenverteiler mit einem Sensor (10) zur Messung der Heizkörpertemperatur (Θ_{HK}) eines durch Zufuhr von Heizfluid beheizbaren Heizkörpers in einem Raum, einem Sensor (7, 19) zur Messung der Raumtemperatur (Θ_{RL}), einem Heizkörperregler (2), welcher die Raumtemperatur (Θ_{RL}) als Regelgröße verwendet und über seine Stellgröße die Zufuhr von Heizfluid zu dem Heizkörper regelt, und einer Auswerteeinrichtung (8, 13), in der aus der Differenz der Heizkörpertemperatur (Θ_{HK}, Θ_{HF}) und der Raumtemperatur (Θ_{RL}, Θ_{RFR/RFV}) der jeweils aktuelle Wärmeverbrauch (VE) ermittelt und registriert wird, **dadurch gekennzeichnet, dass** in der Auswerteeinrichtung (8, 13) aus der Stellgröße (x) des Heizkörperreglers eine Zustandsgröße (VZ) für die Zufuhr von Heizfluid zu dem Heizkörper abgeleitet und der aktuelle Wärmeverbrauch (VE) nur ermittelt und/oder registriert wird, wenn die Zustandsgröße (VZ) eine Zufuhr von Heizfluid zu dem Heizkörper anzeigt.

2. Heizkostenverteiler nach Anspruch 1, **dadurch gekennzeichnet, dass** die Zustandsgröße (VZ) zwei Informationszustände aufweist, von denen der eine keine Zufuhr von Heizfluid und der andere eine Zufuhr von Heizfluid anzeigt.

3. Heizkostenverteiler nach Anspruch 1 oder 2, **dadurch gekennzeichnet, dass** in der Auswerteeinrichtung (8, 13) der aktuelle Wärmeverbrauch (VE) nur ermittelt und/oder registriert wird, wenn die Differenz der Heizkörpertemperatur (Θ_{HK}, Θ_{HF}) und der Raumtemperatur (Θ_{RL}, Θ_{RFP/RFV}) einen vorgegebenen Schwellenwert überschreitet.

4. Heizkostenverteiler nach einem der vorhergehenden Ansprüche, **dadurch gekennzeichnet, dass** die Auswerteeinrichtung (8, 13) an eine Zentraleinheit (4) zur Speicherung und/oder Anzeige des Gesamtwärmeverbrauchs (VE) einer oder mehrerer Heizkostenverteiler (1, 15, 18) angeschlossen ist.

5. Heizkostenverteiler nach einem der vorhergehenden Ansprüche, **dadurch gekennzeichnet, dass** der Sensor (10) zur Messung der Heizkörpertemperatur (Θ_{HK}) und der Heizkörperregler (2) in verschiedenen Geräteeinheiten angeordnet sind.

6. Heizkostenverteiler nach einem der vorhergehenden Ansprüche, **dadurch gekennzeichnet, dass** die Auswerteeinrichtung (8, 13) in den Heizkörperregler (2), in die Geräteeinheit (3) mit dem Sensor (10) zur Messung der Heizkörpertemperatur (Θ_{HK}) und/oder in die Zentraleinheit (4) integriert ist.

7. Heizkostenverteiler nach einem der vorhergehenden Ansprüche, **dadurch gekennzeichnet, dass** der Sensor (7, 19) zur Erfassung der Raumtemperatur (Θ_{RL}) in den Heizkörperregler (2), die Geräteeinheit (3) mit dem Sensor (10) zur Messung der Heizkörpertemperatur (Θ_{HK}) und/oder eine separate Geräteeinheit integriert ist.

8. Heizkostenverteiler nach einem der vorhergehenden Ansprüche, **dadurch gekennzeichnet, dass** der Heizkörperregler (2), eine separate Geräteeinheit (3) und/oder die Zentraleinheit (4) eine Datenübertragungseinrichtung (11, 12, 16) zum Senden und/oder Empfangen von Daten aufweist.

9. Heizkostenverteiler nach einem der vorhergehenden Ansprüche, **dadurch gekennzeichnet, dass** der Heizkörperregler (2) als elektronischer Heizkörperregler mit Stelleingriff auf ein Heizkörperventil (5) oder als manuelles Thermostatventil mit integrierter Stellgrößendetektion und Datenübertragungseinrichtung ausgebildet ist.

## Claims

1. Heating-cost distributor with a sensor (10) for measuring the radiator temperature (Θ_{HK}) of a radiator in a room, which is heatable by means of the supply of heating fluid, a sensor (7, 19) for measuring the room temperature (Θ_{RL}), a radiator control (2) which uses the room temperature (Θ_{RL}) as a control variable and controls the supply of heating fluid to the radiator by means of its manipulated variable, and an evaluation device (8, 13) in which the respective current heat consumption (VE) is established from the difference of the radiator temperature (Θ_{HK}, Θ_{HF}) and the room temperature (Θ_{RL}, Θ_{RFR/RFV}) and recorded, **characterised in that** a state variable (VZ) for the supply of heating fluid to the radiator is derived in the evaluation device (8, 13) from the manipulated variable (x) of the radiator, and the current heat consumption (VE) is only established and/or recorded if the state variable (VZ) indicates a supply of heating fluid to the radiator.

2. Heating-cost distributor according to Claim 1, **characterised in that** the state variable (VZ) has two information states, of which one indicates no supply of heating fluid and the other indicates a supply of heating fluid.

3. Heating-cost distributor according to Claim 1 or 2, **characterised in that** the current heat consumption (VE) is only established and/or recorded in the evaluation device (8, 13) if the difference of the radiator temperature (Θ_{HK}, Θ_{HF}) and the room temperature (Θ_{RL}, Θ_{RFR/RFV}) exceeds a predetermined threshold value.

4. Heating-cost distributor according to any one of the preceding claims, **characterised in that** the evaluation device (8, 13) is connected to a central processing unit (4) for the storage and/or display of the overall heat consumption (VE) of one or a plurality of heating-cost distributors (1, 15, 18).

5. Heating-cost distributor according to any one of the preceding claims, **characterised in that** the sensor (10) for measuring the radiator temperature (Θ_{HK}) and the radiator control (2) are arranged in various device units.

6. Heating-cost distributor according to any one of the preceding claims, **characterised in that** the evaluation device (8, 13) is integrated into the radiator control (2), into the device unit (3) with the sensor (10) for measuring the radiator temperature (Θ_{HK}) and/or into the central processing unit (4).

7. Heating-cost distributor according to any one of the preceding claims, **characterised in that** the sensor (7, 19) for detecting the room temperature (Θ_{RL}) is integrated into the radiator control (2), the device unit (3) with the sensor (10) for measuring the radiator temperature (Θ_{HK}) and/or a separate device unit.

8. Heating-cost distributor according to any one of the preceding claims, **characterised in that** the radiator control (2), a separate device unit (3) and/or the central processing unit (4) has a data transmission device (11, 12, 16) for transmitting and/or receiving data.

9. Heating-cost distributor according to any one of the preceding claims, **characterised in that** the radiator control (2) is constructed as an electronic radiator control with control action on a radiator valve (5) or as a manual thermostatic valve with integrated manipulated value detection and data transmission device.

## Revendications

1. Répartiteur de frais de chauffage comprenant un capteur (10) pour la mesure de la température d'élément de chauffage (Θ_{HK}) d'un élément de chauffage pouvant être chauffé par une arrivée de fluide de chauffage dans un local, un capteur (7, 19) pour la mesure de la température ambiante (Θ_{RL}), un régulateur d'élément de chauffage (2), qui utilise la température ambiante (Θ_{RL}) comme grandeur de réglage et règle par sa grandeur de réglage l'arrivée de fluide de chauffage à l'élément de chauffage, et un dispositif d'analyse (8, 13), dans lequel la consommation de chaleur (VE) respectivement actualisée est déterminée et enregistrée à partir de la différence entre la température d'élément de chauffage (Θ_{HK}, Θ_{HF}) et la température ambiante (Θ_{RL}, Θ_{RFR/RFV}), **caractérisé en ce que**, dans le dispositif d'analyse (8, 13), une grandeur d'état (VZ) est déduite de la grandeur de réglage (X) du régulateur d'élément de chauffage pour l'arrivée de fluide de chauffage à l'élément de chauffage et la consommation de chaleur (VE) actuelle n'est déterminée et/ou enregistrée que lorsque la grandeur d'état (VZ) indique une arrivée de fluide de chauffage à l'élément de chauffage.

2. Répartiteur de frais de chauffage selon la revendication 1, **caractérisé en ce que** la grandeur d'état (VZ) présente deux états d'information, dont l'une n'indique pas une arrivée de fluide de chauffage et l'autre indique une arrivée de fluide de chauffage.

3. Répartiteur de frais de chauffage selon la revendication 1 ou 2, **caractérisé en ce que**, dans le dispositif d'analyse (8, 13), la consommation de chaleur (VE) actuelle n'est déterminée et/ou enregistrée que si la différence entre la température d'élément de chauffage (Θ_{HK}, Θ_{HF}) et la température ambiante (Θ_{RL}, Θ_{RFR/RFV}) dépasse une valeur seuil prédéfinie.

4. Répartiteur de frais de chauffage selon l'une quelconque des revendications précédentes, **caractérisé en ce que** le dispositif d'analyse (8, 13) est raccordé à une unité centrale (4) pour le stockage et/ou l'affichage de la consommation de chaleur globale (VE) d'un ou de plusieurs répartiteurs de frais de chauffage (1, 15, 18).

5. Répartiteur de frais de chauffage selon l'une quelconque des revendications précédentes, **caractérisé en ce que** le capteur (10) pour la mesure de la température d'élément de chauffage (Θ_{HK}) et le régulateur d'élément de chauffage (2) sont disposés dans différentes unités d'appareil.

6. Répartiteur de frais de chauffage selon l'une quelconque des revendications précédentes, **caractérisé en ce que** le dispositif d'analyse (8, 13) est intégré dans le régulateur d'élément de chauffage (2), dans l'unité d'appareils (3) avec le capteur (10) pour la mesure de la température d'élément de chauffage (Θ_{HK}) et/ou dans l'unité centrale (4).

7. Répartiteur de frais de chauffage selon l'une quelconque des revendications précédentes, **caractérisé en ce que** le capteur (7, 19) pour l'enregistrement de la température ambiante (Θ_{RL}) est intégré dans le régulateur d'élément chauffage (2), l'unité d'appareils (3) avec le capteur (10) pour la mesure de la température d'élément de chauffage (Θ_{HK}) et/ou une unité d'appareils séparée.

8. Répartiteur de frais de chauffage selon l'une quelconque des revendications précédentes, **caractérisé en ce que** le régulateur d'élément de chauffage (2), une unité d'appareil (3) séparée et/ou l'unité centrale (4) présentent un dispositif de transmission de données (11, 12, 16) pour l'envoi et/ou la réception de données.

9. Répartiteur de frais de chauffage selon l'une quelconque des revendications précédentes, **caractérisé en ce que** le régulateur d'élément de chauffage (2) est conçu sous forme de régulateur électronique d'élément de chauffage avec intervention de réglage sur une vanne d'élément de chauffage (5) ou sous forme de vanne thermostatique manuelle avec détection intégrée de grandeur de réglage et dispositif de transmission de données.
